# EUROPEAN PATENT APPLICATION

(11) **EP 4 040 422 A1**
(43) Date of publication of application: **10.08.2022**
(21) Application number: 22155551.9
(22) Date of filing: 08.02.2022
(51) Int. Cl.: G08G 1/017, G06V 20/52

(54) **SYSTEM FOR THE VIDEO DETECTION OF THE USE OF A MOBILE PHONE WHILE DRIVING**

(30) Priority: 08.02.2021 IT 202100002777
(71) Applicant: Jarvit S.r.l., 20020 Lainate (MI) (IT)
(72) Inventor: ALCARO, Francesco, 88050 Amaroni (CZ) (IT)
(74) Representative: Giuliano, Natalia

(57) **Abstract**

System (100) for the video detection of the use of a mobile phone while driving, comprising: a camera (101) configured for performing video recordings of at least one vehicle and of at least one driver of said vehicle; an electronic control unit (102) provided with a microcontroller and configured for a real-time optimization of the video recordings; a plurality of sensors configured for the acquisition of environmental parameters and parameters related to the video recordings; a mini-server (104) connected to the electronic control unit (102) and to the camera (101), comprising a storage unit.

The system comprises:
- a first module configured for a multi-level analysis of the video recordings performed by means of deep learning (DL) logics;
- a second module configured for a real-time regulation.

## Description

The present invention relates to a system for the video detection of the use of a mobile phone while driving.

In particular, the present invention relates to a system for the video detection of the use of a mobile phone while driving, of the type that can be used to reduce road accidents caused by the distraction of the driver of a vehicle.

As is known, there are numerous road accidents caused by distraction while driving, a recent study notes that 57% of accidents are caused by distraction while driving on a mobile phone.

Various systems are currently known for detecting the use of mobile phones while driving.

A first example of a known system is described in the text of the patent application US2016232415A1 which describes systems and methods for detecting the use of mobile devices in a motor vehicle. By way of example, an embodiment of such a system exploits an image of a scene shot by means of a camera. The presence of a graphic display of a mobile device is detected within the scene by processing the image to identify a characteristic trace pixel, indicative of the aforementioned graphic display in a portion of the scene, corresponding to the position of the driver inside a vehicle reference frame. An indication of a positive detection of the graphic display of the mobile device used by the driver represents the system output. The camera or cameras can be positioned on the street or in the vehicle, and the system makes use of processing units, carried out by means of computer vision logics, of the shots taken, and of sensors designed to detect the presence and directions of movement of the vehicles, as well as storage units for acquired data, possibly to be transmitted remotely.

The text of patent application GB2482068A describes a system for detecting the use of a mobile communication device by a user while he is driving or otherwise using a vehicle. Data indicative of the operation of a vehicle are correlated with data indicative of the use of a mobile communication device, to determine whether this was used at the same time that the vehicle was in operation. The respective positions of the communication device and the vehicle can be correlated to determine if the communication device is in the same position as the vehicle. The data indicative of the use of the communication device can be received from a radio receiver inside the vehicle, or from an application running on the communication device, or from a node that is part of a communication network.

However, known systems such as those described suffer from limitations such as requiring distributed components, for example a plurality of video cameras, installed along portions of roadways.

A different solution is proposed in the patent application WO2020014731A1 which describes a method for detecting an infringement by vehicle operator is described. The method comprises detecting a vehicle; receiving one or more image of at least a part of the vehicle operator; automatically analysing with a neural network the one or more captured received image to detect an infringing act; and providing the one or more captured received images comprising the detected infringing act to thereby detect the infringement. Also described are a system, a device, a computer system and a computer program product all for detecting an infringement by a vehicle operator. The device may comprise one or more flash for illuminating the vehicle or a part thereof with light at a narrow band and one or more camera comprising a narrow band filter that lets through only the wavelengths of light produced by the one or more flash.

Another solution is described in Xu Beilei et al. "A machine learning approach for detecting cell phone usage" which reports a semi-automatic or automatic solution to detect the use of a smart phone by a driver based on the machine learning using a system of cameras towards the windscreen. The method comprises a first step of localizing the region of the frontal windscreen using the model of the Deformable Part Model (DPM) and a second step using Fisher vectors to distinguish the driver side using the smart phone.

However, known systems such as those described suffer from limitations such as requiring distributed components, for example a plurality of video cameras, installed along portions of roadways.

The purpose of the present invention is to provide a system for the video detection of the use of a mobile phone while driving implemented by means of a single device to be installed on the roadside in a fixed or removable way, like a common speed camera or telelaser, and able to control the driven by drivers of vehicles in transit along a relatively long portion of the road, therefore having characteristics such as to overcome the limits of known technical solutions.

A further object of the present invention is to provide a system for the video detection of the use of a mobile phone while driving capable of automating the process of controlling motorists while driving.

According to the present invention, a system for the video detection of the use of a mobile phone while driving is realized, as defined in claim 1.

For a better understanding of the present invention, a preferred embodiment is now described, purely by way of nonlimiting example, with reference to the attached drawings, in which:
- Figure 1 shows a block diagram depicting the architecture of a system for the video detection of the use of a mobile phone while driving, according to the invention;

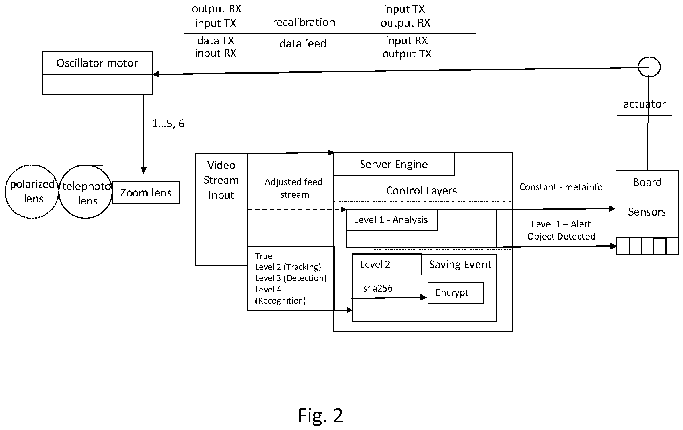

- Figure 2 shows an explanatory diagram of some phases relating to the operation of the system for the video detection of the use of a mobile phone while driving, according to the invention.

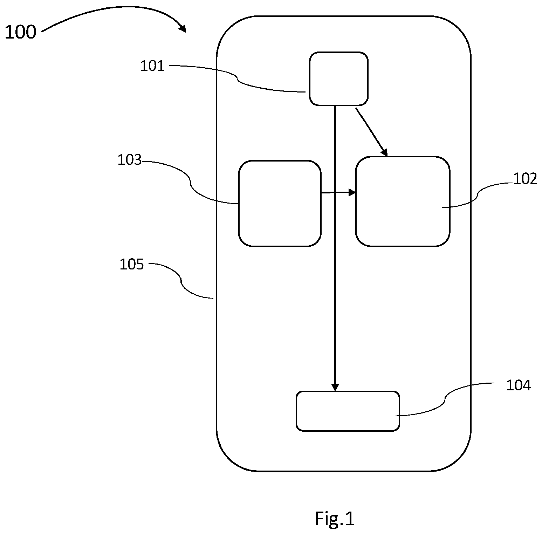

With reference to these figures and, in particular, to figure 1, a system for the video detection of the use of a mobile phone while driving is shown, according to the invention.

In particular, the system 100 for the video detection of the use of a mobile phone while driving according to the invention carries out a video detection through a mathematical and mechanical calculation methodology, extracting a video or a series of frames relative to the exact moment of use of the driving devices.

The system 100 for video detection of the use of a mobile phone while driving according to the invention includes a plurality of embedded software applications developed on electronic boards, built to measure and controlled through one or more microcontrollers, motorized automation systems, devices for progressive optical acquisition, deep learning algorithms to learn information by analyzing data through a mathematical-computational process, computer vision techniques or the implementation of artificial intelligence processes such as object tracking, object detection, object recognition, producing references directly connected with the machine ecosystem that constitutes the apparatus.

According to an aspect of the invention, the system 100 comprises an electronic device capable of autonomously monitoring through a video analysis, even over considerable distances, the actions of a driver of a vehicle, in motion and in static mode, capturing its behavior and activating a procedure for the protected filing of video footage, as proof of what happened in the event that the aforementioned driver is using an electronic device such as a mobile phone.

In particular, system 100 for the video detection of the use of a mobile phone while driving according to the invention comprises:
- a camera 101 configured to make video recordings of at least one vehicle and of at least one driver of said vehicle;
- an electronic control unit 102 equipped with a microcontroller, configured for real-time optimization of video footage;
- a plurality of sensors configured for the acquisition of environmental parameters and related to video footage;
- an electronic interface unit 103, connected to the electronic control unit 102 and to the plurality of sensors;
- a handling unit, connected to the electronic control unit and to the camera 101, equipped with an electric motor and configured to move the camera 101;
- a mini-server 104 connected to the electronic control unit 102 and to the camera 101, comprising a storage unit and suitable for storing the video recordings detected by the camera 101;
- a mechanical support unit 105 suitable for housing the electronic control unit 102, the electronic interface unit 103, the handling unit and the mini-server 104;
- a module for analyzing multilevel video footage, using deep learning (DL) logic, installed on the mini-server 104;
- a real-time regulation module, included in the microcontroller, connected to the plurality of sensors and to the video recording analysis module.

According to an aspect of the invention, the system 100 is preferably installed on the roadside at the edge of a carriageway, in a fixed or removable way, with the mechanical support unit 105, similar to a totem, a column or a tripod, resting or fixed to the road surface.

According to an aspect of the invention, the plurality of sensors includes temperature sensors, fog sensors, humidity sensors.

According to an aspect of the invention, the movement unit is a dedicated actuator, connected and managed by the electronic control unit 102, configured for fine adjustment of the movement of the camera 101, so as to optimize the video shooting conditions on the basis to the logic of the real-time regulation module running on the microcontroller of the electronic control unit 102.

According to one aspect of the invention, the camera 101 is a reflex camera.

According to one aspect of the invention, the electric motor is an oscillating-gyroscopic-rotary motor connected to the electronic control unit 102.

According to one aspect of the invention, the camera 101 comprises a telephoto lens and a polarized lens.

According to one aspect of the invention, the system 100 comprises a point-like directional laser illuminator, designed to improve visibility in fog or low light conditions.

According to an aspect of the invention, the system 100 comprises a mini-compressor and a wiper configured for cleaning the lens.

According to an aspect of the invention, the system 100 comprises a GPS module and a further sensor.

According to one aspect of the invention, the system 100 is powered by an electrical network and / or by rechargeable batteries using photovoltaic modules.

According to one aspect of the invention, the set of software modules included in system 100, and configured to allow their use in smart and automated mode, includes:
- an operating system, LINUX-based, running on mini-server 104;
- a control firmware for the management electronics, the latter including the electronic control unit 102 which uses the support of the electronic interface unit 103;
- a video analysis and management system;
- a deep learning neural networks system;
- a dataset of events already instructed that trigger alarms, sending the firmware instructions to act on the mechanical parts, such as the actuator, via the electric motor, designed to move and finely aim the camera 101, and systems for improving video shooting, such as the laser illuminator and the lens wiper of the camera 101 itself mentioned above;
- an encryption system for the frames of the video footage stored in the storage unit of the mini-server 104.

The system 100, in use, acts by carrying out a constant analysis of the video taken by the reflex camera 101 in parallel differentiated phases (analysis and support): in the support phase, implemented mainly by the electronic control unit 102 through the adjustment module in real time, some alerts determine actions corresponding to mechanical / digital reactions, in the analysis phase, implemented mainly by the analysis module of multilevel video footage, through deep learning and computer vision logics, a state of the event is determined which, upon cyclical end of the analysis, it can be considered 'true' or 'false', respectively determining an incorrect behavioral result (man driving with electronic device in use) or correct (man driving).

In short, the acquisition apparatus, which is the reflex camera 101, takes care of acquiring the video stream, the electronic and mechanical part of stabilizing and improving the field of view by creating multi-focus points, the software part of analyzing the video, create metadata, extract the content actually of interest, i.e. the frames certifying the use of the mobile phone while driving (discarding, i.e. not storing, the rest), store it and encrypt it.

Schematic further:
- on the fanless mini-server 104, equipped with a LINUX-based operating system, the application software is installed including the multi-level video recording analysis module capable of performing video analysis of the constant data flow produced by the camera 101;
- the analysis produces an event that is saved on local and encrypted storage, the storage unit of the mini-server 104, for example a flash memory unit such as an SSD drive, imprinting the video analysis metadata on the file, certifying the circumstances of time and place with GPS technology relating to the 'true' event, according to the aforementioned terms, in a similar way to snapshots with imprinted metadata generated by modern speed camera devices.

The system 100 is designed to operate on several cyclical communication levels, based on correspondence and non-correspondence: in the event of an alert correspondence, actions are activated which are sent as an input via an Ethernet connection on IEEE 802.3 protocol to an electronic card, for example a PCB implementing the two electronic units, electronic control unit 102 and electronic interface unit 103, on which one or more microcontrollers, the sensors described, and I / O interfaces are globally installed, suitable, for example, to manage the motor and the actuator.

The electronic board, in detail through the electronic interface unit and the relevant environmental parameters sensors, produces back feedback: anti-fog, temperature, dirty glass, lens wiper operation, light measurement in lux, GPS date and time.

When the electronic board receives an input with instructions to be performed, the firmware dedicated to the control issues parameterized commands to the actuator, driven by the electric motor, which through a custom designed mechanics is able to perform oscillating, gyroscopic and rotary movements that they cause the telephoto lens connected to the 101 reflex camera to approach or move away, thus optimizing the shooting methods in the act of following, by means of object tracking logics, the vehicles in transit.

During the process of stabilization and improvement of the visual field, determined by the inputs of the electronic board, parallel controls are carried out by analyzing the back feedback of the sensors: for example, in the event of low light the point-like directional infrared laser illuminator is activated to improve the visibility through refracting technique, and in case of insufficient visibility through the lens of the 101 reflex camera, the wiper is activated for self-cleaning, for a further refinement of the shooting modes.

The system 100 according to the invention is therefore conceptually decomposable into a software part, an electronic part and a mechanical part.

The software component is, in detail, based on two distinct and communicating subsystems:
1) a Firmware, including the regulation module in real time, capable of generating the sequence of operations described, directly integrated on the electronic components: this is responsible for the control operations of the microcontroller for the dynamic management of the mechanical parts. it connected, in the terms already described for optim filming.
2) an Application, including the multi-level video shooting analysis module, useful so that the mechanical parts can perform actions in response to instructions dictated by the microcontroller, in turn managed by the firmware. The application is developed in C ++ and is resident on the fanless mini-server 104, receives the video streaming from the reflex camera 101, analyzes the content of the footage and, thanks to the help of deep learning algorithms and computer vision techniques, produces, among the others, metadata, or descriptions of behavior resulting from the analysis of the geometry within the scene, which compared with the already instructed Datasets activate alarms, sending the firmware instructions to act on the mechanical parts. The application is also responsible for extracting the videos and frames that reflect alert parameters, encrypting the frames by inserting them into the local storage of the mini-server 104, obscuring any non-driver passengers, and impressing the elements on the video or frames determinants of the scene such as:
   - vehicle registration number;
   - volumetric classification;
   - detection distance;
   - date and time in NMEA 2000/0183 format;
   - GPS coordinates;
   - description on hooked satellite callback references.

The parameterized alerts of video analysis, as already explained, are created by deep learning algorithms, properly neural networks, which, based on a set of data, are able to recognize the geometries of objects or behaviors: unlike machine learning, for example, a neural networks system thus conceived has a deeper level of abstractive association, and guarantees faster and more precise learning over time.

Once the stream has been received, the system 100 applies an attention protocol determined by a proprietary algorithm to start the following phases, carried out by the multilevel video recording analysis module:
- first level of detection, which with the object detection technique detects whether there is a matching with the reference, for example the vehicle in transit;
- second detection level, which with the object tracking technique follows the object, i.e. the vehicle or more than one, calculating the speed and distance based on the scene, and provides the firmware that controls the microcontroller of the electronic control unit 102 the information to impart to the mechanical part, primarily the camera 101, movement by means of the movement unit, i.e. the actuator managed by the electric motor, capable of progressively approaching the shooting of the reflex camera 101 , in particular through its telephoto lens;

- third level of detection which, in real time, makes use of both object tracking techniques to continue to instruct the microcontroller of the electronic control unit 102 on the variants relating to scene control and, at the same time, of object detection to compare the references second level, such as multiple objects present in the scene shot and verify whether in the aforementioned scene there is a matching with multiple references, in this case the mobile device and the driver;
- fourth level of detection, which uses object recognition techniques to determine where exactly are the objects detected in the scene. Through a proprietary algorithm, able to compare the results obtained, considering the dimensions of the objects in proportion to the space time determined by the vehicle speed, through the analysis of the geometry a mathematical product is produced which determines the value of the 'driver <analysis. -> mobile phone '(' true ',' false ') and, in case of' true ', the digital element, i.e. the frame being analyzed and certifying the use of the mobile phone while driving, is encrypted and saved, otherwise discarded.

Therefore, the system for the video detection of the use of a mobile phone while driving allows, through a device installed on the roadside and equipped with dedicated electronics, logic and mechanics, an effective recognition in real time of improper conduct while driving, providing an archiving event-safe for the forwarding of subsequent subsidies to be paid by undisciplined drivers.

Advantageously according to the invention, the system for the video detection of the use of a mobile phone while driving allows to automatically detect the use of a mobile phone while driving inside a vehicle.

Finally, it is clear that modifications and variations can be made to the system for the video detection of the use of a mobile phone while driving described and illustrated here without departing from the protective scope of the present invention, as defined in the attached claims.

## Claims

1. System (100) for the video detection of the use of a mobile phone while driving, comprising:
- a camera (101) configured for performing video recordings of at least one vehicle and of at least one driver of said vehicle;
- an electronic control unit (102), connected to said camera (101), provided with a microcontroller and configured for a real-time optimization of the video recordings;
- a plurality of sensors configured for the acquisition of environmental parameters and parameters related to the video recordings;
- a mini-server (104) connected to the electronic control unit (102) and to the camera (101), comprising a storage unit and able to save the video recordings detected by the camera (101);
**characterized in** comprising:
- a first module configured for a multi-level analysis of the video recordings performed by means of deep learning (DL) logics, said module being installed on the mini-server (104);
- a second module configured for a real-time regulation, said second module being included in the microcontroller and connected to the plurality of sensors and to the first module.

2. System (100) for the video detection of the use of a mobile phone while driving, **characterized in that** the plurality of sensors includes temperature sensors, fog sensors, humidity sensors.

3. System (100) for the video detection of the use of a mobile phone while driving, **characterized in** comprising a handling unit, connected to the electronic control unit (102) and to the camera (101), provided with an electric motor and configured to move the camera (101).

4. System (100) for the video detection of the use of a mobile phone while driving, **characterized in** comprising a mechanical support unit (105) able to house the electronic control unit (102), the electronic interface unit (103), the handling unit and the mini server (104).

5. System (100) for the video detection of the use of a mobile phone while driving, **characterized in** comprising an electronic interface unit (103), connected to the electronic control unit (102) and to the plurality of sensors.

6. System (100) for the video detection of the use of a mobile phone while driving, **characterized in that** the handling unit is a specific actuator, connected to and managed by the electronic control unit (102), and is configured for the fine adjustment of the movement of the camera (101), so as to optimize the conditions of the video recordings based on the logic of the second module running on the microcontroller of the electronic control unit (102).

7. System (100) for the video detection of the use of a mobile phone while driving, **characterized in that** the electric motor is an oscillating-gyroscopic-rotary motor.

8. System (100) for the video detection of the use of a mobile phone while driving, **characterized in that** the camera (101) comprises a telephoto lens, a polarized lens, a mini-compressor and a wiper configured for cleaning the lens, and a GPS module.

9. System (100) for the video detection of the use of a mobile phone while driving, **characterized in** comprising a directional point laser illuminator.

10. System (100) for the video detection of the use of a mobile phone while driving, **characterized in that** the first module is configured for: detecting the presence of at least one vehicle using object detection techniques applied to the video recordings; detecting the speed and distance of at least one vehicle, by means of object tracking techniques, and moving the actuator; detecting the simultaneous presence of a driver and a mobile phone, while video recording the at least one vehicle, by means of object detection techniques; determining where exactly the driver and the mobile phone are positioned in the scene, by means of object recognition techniques; saving and encrypting frames related to said simultaneous presence and position, in the video recordings, of the driver and mobile phone, to the storage unit included in the mini-server (104), associating said frames with data included in the group consisting of: vehicle registration number; volumetric classification of the vehicle; detection distance of the vehicle; date and time of the survey of the vehicle; GPS coordinates; description about callback references of hooked satellites.
